# EUROPEAN PATENT APPLICATION

(11) **EP 4 572 546 A1**
(43) Date of publication of application: **18.06.2025**
(21) Application number: 23852817.8
(22) Date of filing: 27.07.2023
(51) Int. Cl.: H05K 5/06, H05K 5/00, H04M 1/02

(54) **ELECTRONIC DEVICE COMPRISING WATERPROOF STRUCTURE**

(30) Priority: 11.08.2022 KR 20220100580; 12.08.2022 KR 20220101560
(71) Applicant: Samsung Electronics Co., Ltd., Suwon-si, Gyeonggi-do 16677 (KR)
(72) Inventor: LEE, Shinhyung, Suwon-si Gyeonggi-do 16677 (KR); KIM, Yunsup, Suwon-si Gyeonggi-do 16677 (KR); SEONG, Beommo, Suwon-si Gyeonggi-do 16677 (KR); AN, Sanghoon, Suwon-si Gyeonggi-do 16677 (KR); LIM, Dongeon, Suwon-si Gyeonggi-do 16677 (KR)
(74) Representative: Walaski, Jan Filip
(86) International application number: PCT/KR2023/010927
(87) International publication number: WO 2024/034936

(57) **Abstract**

An electronic device according to an embodiment disclosed in the present document may comprise a housing which surrounds a display, a back cover facing a front cover, and/or an internal space formed between the display and the back cover. The housing may comprise a first housing comprising a first plate portion at least partially facing the display, and a first side wall surrounding an edge of the first plate portion. The housing may comprise a second housing comprising a second plate portion to which the back cover is coupled, and a second side wall which surrounds an edge of the second plate portion and is disposed to be spaced apart on an outer side of at least a portion of the first side wall. A gap extending from a separation space between the first side wall and the second side wall may be formed between the first housing and the second housing. The first side wall may comprise a conduit extending concavely along the circumferential direction of the electronic device in a form in which an upper portion thereof is open toward the gap.

## Description

### [Technical Field]

The disclosure relates to a waterproof structure provided in a portion of a housing and an electronic device including the same.

### [Background Art]

The term "electronic device" may refer to a device that performs a specific function based on an installed program, such as a home appliance, an electronic scheduler, a portable multimedia player, a mobile communication terminal, a tablet PC, a video/audio device, a desktop/laptop PC, or a vehicle navigation system. For example, these electronic devices may output stored information as sound or images. As the demand for mobile communication and the degree of integration of electronic devices have increased, various techniques are being developed to enhance the portability of electronic devices and improve user convenience in using multimedia functions or the like.

### [Detailed Description of the Invention]

### [Technical Solution]

An electronic device according to an embodiment disclosed herein may include a display, a front surface cover, a rear surface cover facing the front surface cover, and/or a housing surrounding the inner space formed between the display and the rear surface cover. The housing may include a first housing including a first plate portion at least partially facing the display, and a first side wall surrounding a perimeter of the first plate portion. The housing may include a second housing including a second plate portion to which the rear surface cover is coupled, and a second side wall surrounding a perimeter of the second plate portion and spaced outwardly apart from at least a portion of the first side wall. Between the first housing and the second housing, a gap may extend from a separation space between the first side wall and the second side wall. The first side wall may include a duct extending concavely along a peripheral direction of the electronic device in a form in which an upper portion is open to the gap.

### [Brief Description of Drawings]

FIG. 1 is a block diagram of an electronic device according to an embodiment disclosed herein in a network environment.
FIG. 2 is a front perspective view of an electronic device according to an embodiment disclosed herein.
FIG. 3 is a rear perspective view of the electronic device according to an embodiment disclosed herein.
FIG. 4 is an exploded perspective view of the electronic device according to an embodiment disclosed herein.
FIG. 5 is a view illustrating a waterproof structure of an electronic device according to an embodiment disclosed herein.
FIG. 6 is an enlarged view of portion A in FIG. 5.
FIG. 7 is a cross-sectional view taken along line A-A' in FIG. 5.
FIG. 8 is a cross-sectional view taken along line B-B' in FIG. 5.
FIG. 9 is a cross-sectional view taken along line C-C' in FIG. 5.
FIG. 10 is a view illustrating a first housing and a duct of an electronic device according to an embodiment disclosed herein.
FIG. 11 is a detailed view of portion b of FIG. 9.
FIG. 12 is a view illustrating a second housing and a portion of a rib of an electronic device according to an embodiment disclosed herein.
FIG. 13 is a detailed view of portion c of FIG. 12.
FIG. 14 is a view illustrating a first housing, a second housing, and a waterproof structure of an electronic device according to an embodiment disclosed herein.
FIG. 15 is an enlarged view of portion e of FIG. 14.
FIG. 16 is a cross-sectional view taken along line D-D' of FIG. 15.
FIG. 17 is an enlarged view of portion f of FIG. 14.
FIG. 18 is a cross-sectional view taken along line E-E' of FIG. 17.
FIG. 19 is a cross-sectional view taken along line F-F' of FIG. 18.

### [Mode for Carrying out the Invention]

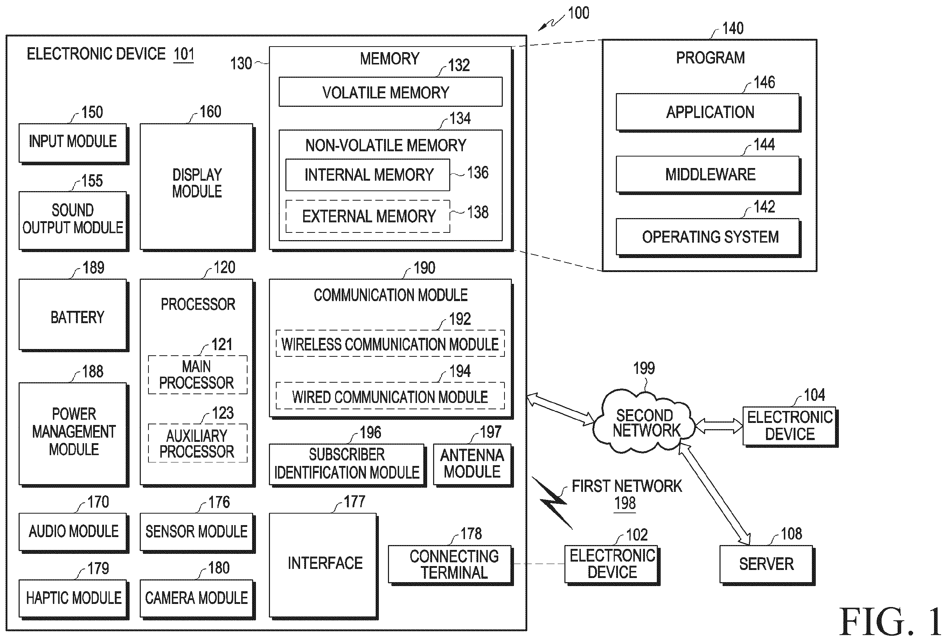

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, a length direction, a width direction, and/or a thickness direction of an electronic device may be mentioned. The length direction may be defined as the "Y-axis direction", the width direction may be defined as the "X-axis direction", and/or the thickness direction may be defined as the "Z-axis direction". In an embodiment, the direction in which a component is oriented may be mentioned along with the orthogonal coordinate system illustrated in the drawings, as well as the "negative/positive symbol (-/+)". For example, the front surface of an electronic device or a housing may be defined as a "surface oriented in the +Z direction", and the rear surface may be defined as a "surface oriented in the -Z direction". In an embodiment, a side surface of the electronic device or the housing may include an area oriented in the +X direction, an area oriented in the +Y direction, an area oriented in the -X direction, and/or an area oriented in the -Y direction. In another embodiment, the "X-axis direction" may include both the "-X direction" and the "+X direction". It is noted that these are based on the orthogonal coordinate system illustrated in the drawings for the sake of brevity of description, and the description of these directions or components does not limit an embodiment disclosed herein. For example, depending on whether the electronic device is in an unfolded or folded state, the direction in which the aforementioned front or rear surface may vary, and the aforementioned directions may be interpreted differently depending on a user's holding habits.

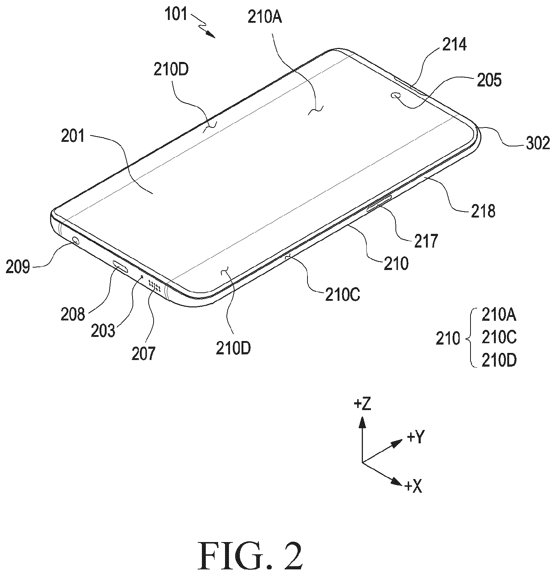

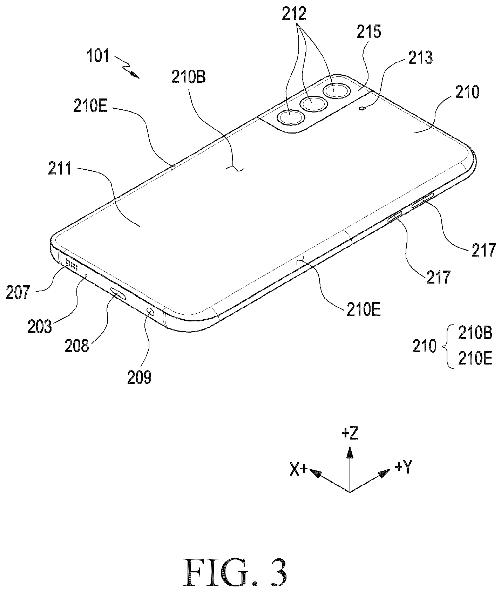

The configuration of the electronic device 200 of FIGS. 2 and 3 may be entirely or partially identical to that of the electronic device 101 of FIG. 1.

FIG. 2 is a front perspective view of an electronic device according to an embodiment disclosed herein. FIG. 3 is a rear perspective view of the electronic device according to an embodiment disclosed herein.

Referring to FIGS. 2 and 3, the portable electronic device 101 according to an embodiment may include a housing 210 including a front surface 210A, a rear surface 210B, and a side surface 210C surrounding the space between the front surface 210A and the rear surface 210B. In an embodiment (not illustrated), the term "housing 210" may refer to a structure defining some of the front surface 210A of FIG. 2, and the rear surface 210B and the side surface 210C of FIG. 3. According to an embodiment, at least a portion of the front surface 210A may be formed of a substantially transparent front surface plate portion 202 (e.g., a glass plate portion or a polymer plate portion including various coating layers). The rear surface 210B may be provided by the rear surface cover 211. The rear surface cover 211 may be made of, for example, glass, ceramic, polymer, metal (e.g., aluminum, stainless steel (STS), or magnesium), or a combination of two or more of these materials. The side surface 210C may be defined by a side surface bezel structure (or a "side wall") 218 coupled to the front surface plate portion 202 and the rear surface cover 211 and including metal and/or polymer. In an embodiment, the rear surface cover 211 and the side surface bezel structure 218 may be integrated and may include the same material (e.g., glass, a metal material such as aluminum, or ceramic).

Referring to FIG. 2, according to an embodiment, the front surface plate portion 202 may include, at opposite sides of the long edges, two first edge areas 210D, which are bent from the front surface 210A toward the rear surface cover 211 and extend seamlessly. Referring to FIG. 3, according to an embodiment, the rear surface cover 211 may include, at opposite sides of the long edges, two second edge areas 210E, which are bent from the rear surface 210B toward the front surface plate portion 202 and extend seamlessly. In an embodiment, the front surface plate portion 202 (or the rear surface cover 211) may include only one of the first edge areas 210D (or the second edge areas 210E). In an embodiment, some of the first edge areas 210D or the second edge areas 210E may not be included. For example, when viewed from the side of the electronic device 101, the side surface bezel structure 218 may have a first thickness (or width) on the side surface that does not include the first edge areas 210D or the second edge areas 210E. For example, when viewed from the side of the electronic device 101, the side surface bezel structure 218 may have a second thickness that is thinner than the first thickness on the side surface that includes the first edge areas 210D or the second edge areas 210E.

According to an embodiment, the electronic device 101 may include at least one of a display 201, audio modules 203, 207, and 214 (e.g., the audio module 170 in FIG. 1), a sensor module (e.g., the sensor module 176 in FIG. 1), camera modules 205, 212, and 213 (e.g., the camera module 180 in FIG. 1), a key input device 217 (e.g., the input module 150 in FIG. 1), and connector holes 208 and 209 (e.g., the connection terminal 178 in FIG. 1). In an embodiment, in the electronic device 101, at least one of the components (e.g., the connector hole 209) may be omitted, or other components may be additionally included.

According to an embodiment, the display 201 may be visually exposed through a substantial portion of, for example, the front surface plate portion 202. In an embodiment, at least a portion of the display 201 may be visually exposed through the front surface plate portion 202 defining the front surface 210A and the first edge areas 210D. In an embodiment, the periphery of the display 201 may be formed to be substantially the same as the peripheral shape of the front surface plate portion 202 adjacent thereto. In an embodiment (not illustrated), the distance between the periphery of the display 201 and the periphery of the front surface plate portion 202 may be substantially constant in order to enlarge the visually exposed area of the display 201.

According to an embodiment, the surface of the housing 210 (or the front surface plate portion 202) may include a screen display area provided as the display 201 is visually exposed. For example, the screen display area may include the front surface 210A and the first edge areas 210D.

In an embodiment (not illustrated), the screen display area (e.g., the front surface 210A and the first edge areas 210D) of the display 201 may have a recess or an opening provided in a portion thereof and may include at least one of an audio module 214, a sensor module (not illustrated), a light-emitting element (not illustrated), and a camera module 205, which are aligned with the recess or the opening. According to an embodiment (not illustrated), the rear surface of the screen display area of the display 201 may include at least one of an audio module 214, a sensor module (not illustrated), a camera module 205, a fingerprint sensor (not illustrated), and a light-emitting element (not illustrated). According to an embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen. According to an embodiment, at least some of the key input devices 217 may be disposed in the first edge areas 210D and/or the second edge areas 210E.

According to an embodiment, the audio modules 203, 207, and 214 may include, for example, a microphone hole 203 and speaker holes 207 and 214. A microphone configured to acquire external sound may be placed inside the microphone hole 203, and in an embodiment, multiple microphones may be placed to detect the direction of sound. The speaker holes 207 and 214 may include an external speaker hole 207 and a communication receiver hole 214. In an embodiment, the speaker holes 207 and 214 and the microphone hole 203 may be implemented as a single hole, or a speaker may be included without the speaker holes 207 and 214 (e.g., a piezo speaker). The audio module 203, 207, or 214 is not limited to the above-described structure, and may be variously changed in design depending on the structure of the electronic device 101 by mounting only some audio modules or by adding new audio modules.

According to an embodiment, the sensor module (not illustrated) may generate, for example, an electrical signal or a data value corresponding to an internal operating state or an external environmental state of the electronic device 101. The sensor modules (not illustrated) may include, for example, a first sensor module (e.g., a proximity sensor) and/or a second sensor module (e.g., a fingerprint sensor) disposed on the front surface 210A of the housing 210, and/or a third sensor module (e.g., an HRM sensor) and/or a fourth sensor module (e.g., a fingerprint sensor) disposed on the rear surface 210B of the housing 210. In an embodiment (not illustrated), the fingerprint sensor may be disposed not only on the front surface 210A (e.g., the display 201) of the housing 210, but also on the rear surface 210B. The electronic device 101 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor. The sensor modules are not limited to the above-described structure, and may be variously changed in design depending on the structure of the electronic device 101, for example, by mounting only some of the sensor modules or by adding new sensor modules.

According to an embodiment, the camera modules 205, 212, and 213 may include, for example, a front camera module 205 disposed on the front surface 210A of the electronic device 101, a rear camera module 212 disposed on the rear surface 210B, and/or a flash 213. The camera modules 205 and 212 may include one or more lenses, an image sensor, and/or an image signal processor. The flash 213 may include, for example, a light-emitting diode or a xenon lamp. In an embodiment, two or more lenses (e.g., an infrared camera lens, a wide-angle lens, and a telephoto lens) and image sensors may be disposed on one surface of the electronic device 101. The camera modules 205, 212, and 213 are not limited to the above-described structure, and may be variously changed in design depending on the structure of the electronic device 101, for example, by mounting only some of the camera modules or by adding new camera modules.

According to an embodiment, the electronic device 101 may include a plurality of camera modules (e.g., a dual camera or a triple camera) having different properties (e.g., fields of view) or functions, respectively. For example, the plurality of camera modules 205 and 212 including lenses having different fields of view may be provided, and the electronic device 101 may control the change of the fields of view of the camera modules 205 and 212 executed therein based on a user's selection. For example, at least one of the plurality of camera modules 205 and 212 may be a wide-angle camera, and at least one of other camera modules may be a telephoto camera. Similarly, at least one of the plurality of camera modules 205 and 212 may be a front camera, and at least one of other camera modules may be a rear camera. In addition, the plurality of camera modules 205 and 212 may include at least one of a wide-angle camera, a telephoto camera, or an infrared (IR) camera (e.g., a time-of-flight (TOF) camera, or a structured light camera). According to an embodiment, the IR camera may be operated as at least a part of a sensor module. For example, the TOF camera may be operated as at least a part of a sensor module (not illustrated) for detecting a distance to an object.

According to an embodiment, the key input device 217 may be disposed on the side surface 210C of the housing 210. In an embodiment, the electronic device 101 may not include some or all of the above-mentioned key input devices 217, and a key input device 217, which is not included, may be implemented in another form, such as a soft key, on the display 201. In an embodiment, a key input device may include a sensor module 216 disposed on the rear surface 210B of the housing 210.

According to an embodiment, the light-emitting element (not illustrated) may be disposed on, for example, the front surface 210A of the housing 210. The light-emitting element (not illustrated) may provide, for example, the state information of the electronic device 101 in an optical form. In an embodiment, the light-emitting element (not illustrated) may provide, for example, a light source that is linked with the operation of the front camera module 205. The light-emitting element (not illustrated) may include, for example, an LED, an IR LED, and/or a xenon lamp.

According to an embodiment, the connector holes 208 and 209 may include, for example, a first connector hole 208 capable of accommodating a connector (e.g., a USB connector) configured to transmit/receive power and/or data to/from an external electronic device, and a second connector hole (e.g., an earphone jack) 209 capable of accommodating a connector configured to transmit/receive an audio signal to/from an external electronic device.

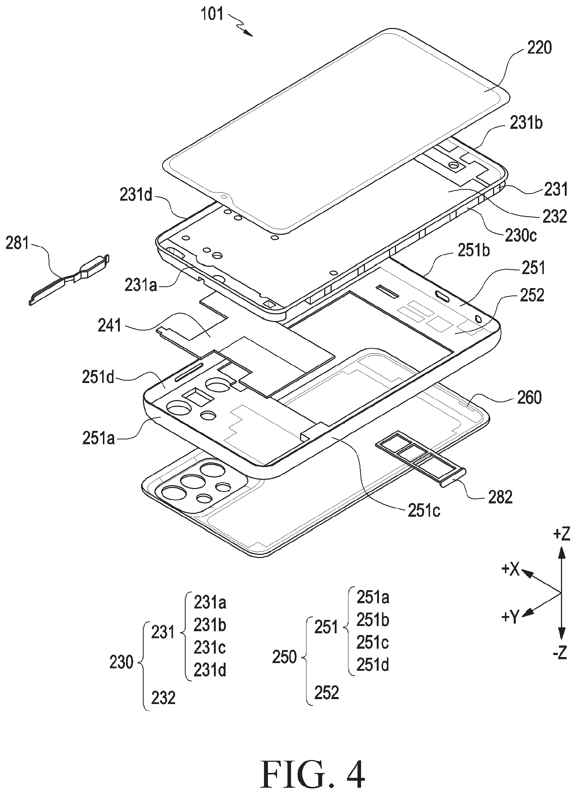

According to an embodiment, some camera modules 205 among the camera modules 205 and 212 and/or some sensor modules (not illustrated) among the sensor modules may be disposed to be exposed to the outside through at least a portion of the display 201. For example, the camera modules 205 may include a punch hole camera disposed inside a hole or recess provided in the rear surface of the display 201. According to an embodiment, the camera module 212 may be disposed inside the housing 210 such that the lens is exposed to the rear surface 210B of the electronic device 101. For example, the camera module 212 may be disposed on a printed circuit board (e.g., the printed circuit board 240 in FIG. 4).

According to an embodiment, the camera module 205 and/or the sensor module may be disposed from the inner space of the electronic device 101 to the front surface plate portion 202 of the display 201 to come into contact with the outer environment through a transparent area. In addition, some sensor modules 204 may be disposed in the inner space of the electronic device to perform the functions thereof without being visually exposed through the front surface plate portion 202.

FIG. 4 is an exploded perspective view of the electronic device 101 according to an embodiment disclosed herein.

Referring to FIG. 4, the electronic device 101 according to an embodiment (e.g., the electronic device 101 in FIGS. 1 to 3) may include a display 220 (e.g., the display 201 and the front surface plate portion 202 in FIG. 2), a first housing 230 (e.g., a bracket), a printed circuit board 240 (e.g., a PCB, a flexible PCB (FPCB), or a rigid flexible PCB (RFPCB)), a battery (not illustrated) (e.g., the battery 189 in FIG. 1), a second housing 250 (e.g., a rear structure W), an antenna (not illustrated) (e.g., the antenna module 197 in FIG. 1), a rear surface cover 260 (e.g., the rear surface cover 211 in FIG. 2), a waterproof structure 270, a key assembly 281 (e.g., the key input device 217 in FIGS. 2 and 3), and a storage medium tray 282. The electronic device 101 may further include a camera module (e.g., the camera modules 205, 212, and 213).

In an embodiment, in the electronic device 101, at least one of the above-mentioned components may be omitted or other components may be additionally included. The configuration of the electronic device 101 of FIG. 4 may be wholly or partially identical or similar to the configuration of the electronic device 101 of FIG. 2 and/or FIG. 3, and a redundant description will be omitted below.

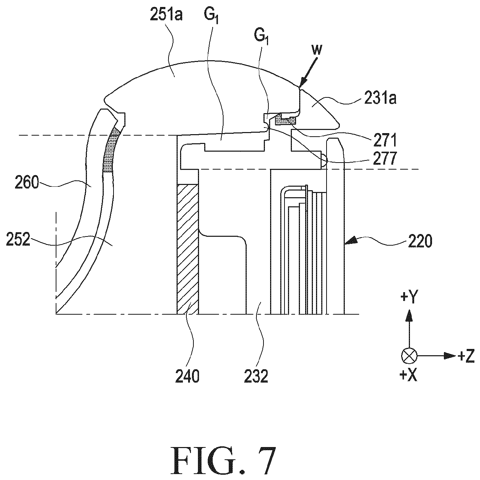

In an embodiment, the first housing 230 may include a first side wall 231 and a first plate portion 232. As an example, referring to FIG. 7, the first side wall 231 and the first plate portion 232 may, for convenience, be distinguished based on the dotted line area indicated in FIG. 7. According to an embodiment, the first side wall 231 may form at least a portion of the exterior of the electronic device 101 (e.g., the side surface 210C in FIGS. 2 and 3). For example, the configuration of the first side wall 231 may be partially identical or similar to the configuration of the side surface bezel structure 218 in FIG. 2. For example, the first housing 230 may be made of a metallic material and/or a non-metallic (e.g., polymer) material. According to an embodiment, the first side wall 231 may surround the inner space of the electronic device 101 formed between the first plate portion 232 and the second plate portion 252 together with the second side wall 251 of the second housing 250 described below. For example, components including electrical components and/or electronic components (e.g., a printed circuit board 240 and/or a battery (not illustrated)) may be disposed in the inner space. According to an embodiment, the first side wall 231 may be formed along the periphery (or perimeter) of the first plate portion 232. According to an embodiment, the first side wall 231 may include a (1-1)^{th} side wall (231a) (the side wall in the +Y direction) disposed at the upper end (forming a portion of the upper end) of the electronic device, a (1-2)^{th} side wall 231b (the side wall in the -Y direction) disposed at the lower end (forming a portion of the lower end) of the electronic device, a (1-3)^{th} side wall 231c (the side wall in the -X direction), and/or a fourth side wall 231d (the side wall in the +X direction).

According to an embodiment, the first plate portion 232 may be disposed inside the electronic device 101, and may be connected to the first side wall 231 or may be integrated with the first side wall 231. According to an embodiment, one surface (e.g., the front surface or the surface in the +Z direction) of the first plate portion 232 may at least partially face the display 220. For example, the display 220 may be coupled to the first side wall 231 and/or the first plate portion 232. According to an embodiment, a printed circuit board 240 may be disposed on the other surface of the first plate portion 232 facing away from the surface on which the display 220 is disposed.

According to an embodiment, a processor (e.g., the processor 120 in FIG. 1), memory (e.g., the memory 130 in FIG. 1), and/or an interface (e.g., the interface 177) may be mounted on the printed circuit board 240. The processor may include, for example, at least one of a central processing unit, an application processor, a graphics processing unit, an image signal processor, a sensor hub processor, or a communication processor. According to an embodiment, the printed circuit board 240 may include a flexible printed circuit board-type radio frequency cable (FRC). For example, the printed circuit board 240 may be disposed on at least a portion of the first plate portion 232, and may be electrically connected to an antenna module (e.g., the antenna module 197 in FIG. 1) and a communication module (e.g., the communication module 190 in FIG. 1).

According to an embodiment, the memory may include, for example, volatile memory or nonvolatile memory.

According to an embodiment, the interface may include, for example, a high-definition multimedia interface (HDMI), a universal serial bus (USB) interface, an SD card interface, and/or an audio interface. The interface may electrically or physically connect, for example, the electronic device 101 to an external electronic device 101, and may include a USB connector, an SD card/an MMC connector, or an audio connector.

According to an embodiment, the battery (not illustrated) is a device that supplies power to at least one component of the electronic device 101, and may include, for example, a non-rechargeable primary battery, a rechargeable secondary battery, or a fuel cell. At least a portion of the battery (not illustrated) may be disposed to on substantially the same plane as, for example, the printed circuit board 240. The battery (not illustrated) may be integrally disposed inside the electronic device 101 or may be detachably disposed on the electronic device 101.

In an embodiment, the second housing 250 may include a second side wall 251 and a second plate portion 252. In an embodiment, the second side wall 251 and the second plate portion 252 may be integrated. As an example, referring to FIG. 7, the second side wall 251 and the second plate portion 252 may be, for convenience, distinguished and referred to based on the dotted line area indicated in FIG. 7. For example, the second plate portion 252 may be disposed inside the electronic device 101. According to an embodiment, the second housing 250 may be disposed between the printed circuit board 240 and an antenna (not illustrated). For example, on one surface of the second plate portion 252 (e.g., the front surface or the surface in the +Z direction), the printed circuit board 240 and/or a battery (not illustrated) may be disposed, while on the other surface (e.g., the rear surface or the surface in the -Z direction), an antenna (not illustrated) may be disposed. For example, the second housing 250 may be made of a metallic material and/or a non-metallic (e.g., polymer) material.

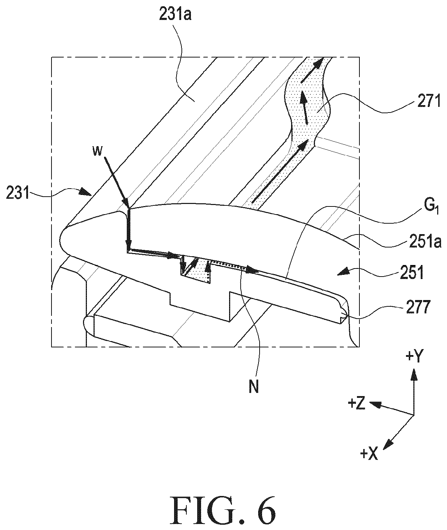

According to an embodiment, the second side wall 251 may be formed along the periphery (or perimeter) of the second plate portion 252. For example, the configuration of the second side wall 251 may be partially identical or similar to the configuration of the side surface bezel structure 218 in FIG. 2. In an embodiment, the second side wall 251 may surround the inner space of the electronic device 101 formed between the first plate portion 232 and the second plate portion 252 together with the first side wall 231 of the first housing 230. For example, the second side wall 251 may form the exterior (e.g., the side surface 210C in FIGS. 2 and 3) of the electronic device 101 together with the first side wall 231. For example, the second side wall 251 and the first side wall 231 may define a gap (e.g., the gap G1 in FIG. 6) therebetween, but may form a side surface (e.g., the side surface 210C of FIGS. 2 and 3) that is substantially connected on the exterior. According to an embodiment, the second side wall 251 may include a (2-1)^{th} side wall (251a) (the side wall in the +Y direction) disposed at the upper end (forming a portion of the upper end) of the electronic device, a (2-2)^{th} side wall 251b (the side wall in the -Y direction) disposed at the lower end (forming a portion of the lower end) of the electronic device, a (2-3)^{th} side wall 251c (the side wall in the -X direction), and/or a (2-4)^{th} side wall 251d (the side wall in the +X direction).

In an embodiment, the key assembly 281 (e.g., the key input device 217 in FIGS. 2 and 3) and/or the storage medium tray 282 may be disposed on a side surface (e.g., the side surface 210C in FIGS. 2 and 3) of the electronic device 101. For example, the key assembly 281 and/or the storage medium tray 282 may be disposed inside the left and right (the X direction) side surfaces (e.g., the side surface 210C in FIGS. 2 and 3) of the electronic device 101.

In an embodiment, the key assembly 281 may be disposed inside one side surface (e.g., the right side surface or the side surface in the +X direction) among the side surfaces (e.g., the side surface 210C in FIGS. 2 and 3) of the electronic device 101. According to an embodiment, the (1-4)^{th} side wall 231d and/or the (2-4)^{th} side wall 251d may include an accommodation area (not illustrated) partially deleted or perforated to accommodate the key assembly 281. For example, a portion of the key assembly 281 (e.g., the key input device 271 in FIGS. 2 and 3) may close the accommodation area (not illustrated) while being exposed to the outside of the electronic device 101, and may form a portion of the exterior of the electronic device 101 together with the (2-4)^{th} side wall 251d. The remaining portion of the key assembly 281 may be disposed inside the (2-4)^{th} side wall 251d.

According to an embodiment, the storage medium tray 282 may be disposed inside one side surface (e.g., the left side surface or the side surface in the -X direction) among the side surfaces (e.g., the side surface 210C in FIGS. 2 and 3) of the electronic device 101. For example, a storage medium may be disposed on the storage medium tray 282. The "storage medium" may include a memory card such as an SD card (e.g., the external memory 138 in FIG. 1) or a subscriber identification module (SIM) card. According to an embodiment, the (1-3)^{th} side wall 231c and/or the (2-3)^{th} side wall 251c may include a mounting area (not illustrated) partially deleted or perforated to accommodate the storage medium tray 282. For example, a portion of the storage medium tray 282 may form a portion of the exterior of the electronic device 101 together with the (2-3)^{th} side wall 251c while closing the mounting area (not illustrated). The remaining portion of the storage medium tray 282 may be disposed inside the (2-3)^{th} side wall 251c through the mounting area (not illustrated).

According to an embodiment, the antenna may be disposed between the rear surface cover 260 and the battery (not illustrated). The antenna may include, for example, a near-field communication (NFC) antenna, a wireless charging antenna, and/or a magnetic secure transmission (MST) antenna. The antenna may, for example, perform short-distance communication with an external device, or wirelessly transmit and receive power required for charging. In an embodiment, an antenna structure may be formed of a portion or combination of the first side wall 231 and/or the first plate portion 232.

According to an embodiment, the rear surface cover 260 may define at least a portion of the rear surface of the electronic device 101 (e.g., the rear surface 210B in FIG. 3).

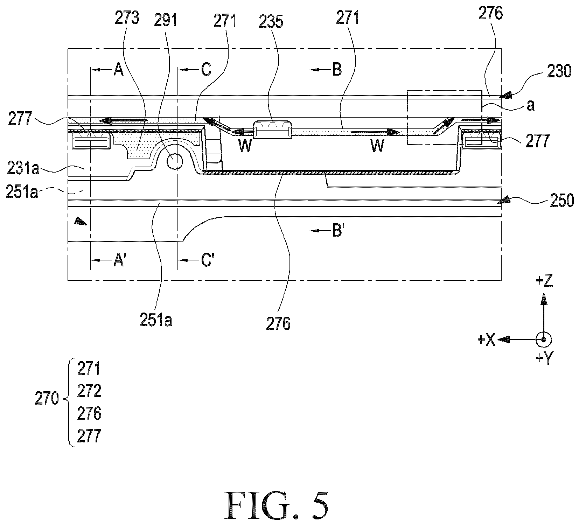

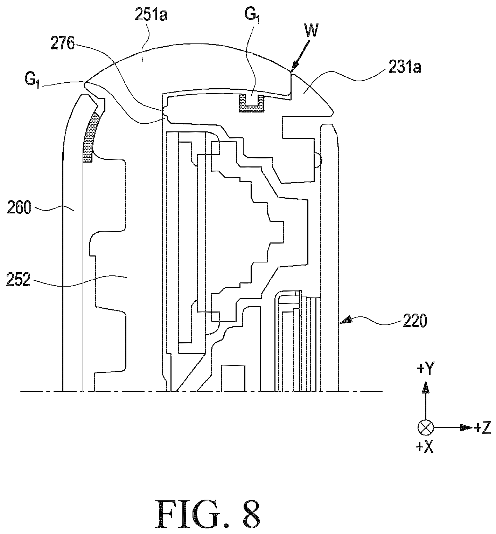

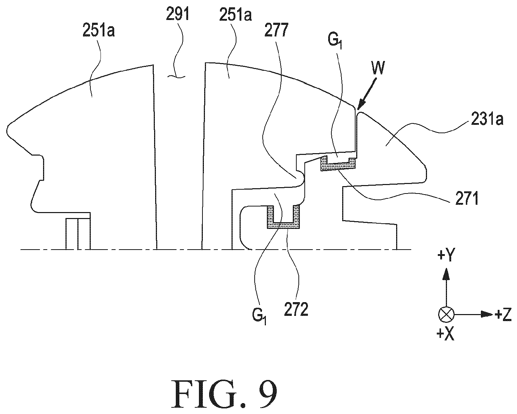

FIG. 5 is a view illustrating a waterproof structure of an electronic device according to an embodiment disclosed herein. FIG. 6 is an enlarged view of portion A in FIG. 5. FIG. 7 is a cross-sectional view taken along line A-A' in FIG. 5. FIG. 8 is a cross-sectional view taken along line B-B' in FIG. 5. FIG. 9 is a cross-sectional view taken along line C-C' in FIG. 5.

Referring to FIGS. 5 to 9, in an embodiment, the first housing 230 and the second housing 250 may be arranged such that the first plate portion (e.g., the first plate portion 232 in FIG. 4) and the second plate portion (e.g., the second plate portion 252 in FIG. 4) at least partially face each other. According to an embodiment, the first housing 230 and the second housing 250 may enclose an inner space defined between a display (e.g., the display 220 of FIG. 4) and a rear cover 260 (or the inner space of an electronic device). For example, various internal components such as electrical components and/or electronic components (e.g., a printed circuit board 240 and/or a battery (not illustrated)) may be disposed in the "inner space".

In an embodiment, the first housing 230 and the second housing 250 may be fabricated separately and coupled to form a housing assembly. For example, a portion of the first housing 230 and/or the second housing 250, including the side walls 231 and 251, may correspond to a coupled area between the two housings. According to an embodiment, the first housing 230 and the second housing 250 may be positioned such that the side walls 231 and 251 and a portion of the plate portions 232 and 252 extending from the side walls 231 and 251 are disposed with an air gap therebetween. For example, the air gap may be referred to as a "gap G1" (e.g., an assembly gap G1). For example, the "gap G1" may be formed of the first side wall 231, the first plate portion 232, the second side wall 251, and/or the second plate portion 252. For example, the gap G1 may be formed along the entire or a portion of the periphery of the electronic device 101 (or the periphery of the first housing 230 and/or the second housing 250). For example, the "gap G1" may form a path leading from the separation space between the two side walls 231 and 251, where an external fluid (e.g., water W) initially enters the electronic device 101, to the inner space of the electronic device 101. For example, the inner space of the electronic device 101 may be fluidly connected to the outside of the electronic device 101 through the gap G1. For example, the gap G1 may function as part of an air vent. For example, the gap G1 may be connected to areas formed as penetrated or recessed areas in the first side wall 231 and/or the second side wall 251, such as microphone holes (e.g., the microphone hole 203 in FIGS. 2 and 3), speaker holes (e.g., the speaker holes 207 and 214) in FIG. 2), connector holes (e.g., the connector holes 208 and 209 in FIGS. 2 and 3), and/or through-holes accommodating a key assembly 281 or a storage medium tray 282. However, the configurations of the housings 230 and 250 and the gap G1 are not limited to the above descriptions. For example, the first housing 230 and the second housing 250 may be configured as an integral single housing member, and the "gap G1" may refer to the gap; G1 disposed between the housing member and the display 220.

Referring to FIGS. 5 and 6, in an embodiment, the two side walls 231 and 251 may at least partially overlap each other. For example, when viewed in the length direction of the electronic device 101 (the Y-axis direction), the two side walls 231 and 251 may at least partially overlap each other. According to an embodiment, the surface of a portion of the first side wall 231 may form a portion of the exterior of the electronic device 101 together with the second side wall 251, while another portion may be disposed inside the electronic device 101. For example, the other portion of the first side wall 231 may overlap at least a portion of the second side wall 251 and may be disposed beneath the second side wall 251 (in the -Z-axis direction).

In an embodiment, the electronic device 101 may include an audio hole 291 on one side surface. For example, the audio hole 291 may be a microphone hole (e.g., the microphone hole 203 in FIGS. 2 and 3), an external speaker hole (e.g., the external speaker hole 207 in FIGS. 2 and 3), or an external receiver hole (e.g., the call receiver hole 214 in FIGS. 2 and 3). According to an embodiment, the audio hole 291 may be formed through the first side wall 231 and/or the second side wall 251.

Referring to FIG. 5, in an embodiment, a waterproof structure 270 of an electronic device 101 (e.g., the electronic device 101 in FIG. 1, FIG. 2, FIG. 3, and/or FIG. 4) may include one or more ducts 271 and 272 disposed in the first housing 230 and one or more ribs 276 and 277 disposed in the first housing 230 and/or the second housing 250.

In an embodiment, the one or more ducts 271 and 272 may be provided in the first housing 230 (e.g., the first housing 230 in FIG. 4). According to an embodiment, the one or more ribs 276 and 277 may be provided in the first housing 230 and/or the second housing 250 (e.g., the second housing 250 in FIG. 4).

In an embodiment, a state of the electronic device 101 with a high frequency of use may be referred to as a "basic state" of the electronic device 101. For example, the "basic state" may refer to the state in which the upper side wall (the (1-1)^{th} side wall 231a and/or the (2-1)^{th} side wall 251a) of the electronic device 101 is substantially directed upward and the display 220 is substantially directed forward. For example, external water W may flow into the gap G1 formed in the peripheral direction of the electronic device 101. In the basic state of the electronic device 101, among the portions of the gap G1, the upper side wall (the (1-1)^{th} side wall 231a and/or the (2-1)^{th} side wall 251a) of the electronic device 101 may be most likely to come into contact with water W outside the electronic device 101. For example, in the basic state of the electronic device 101, water W falling in the direction of gravity, such as rainwater, may flow into the gap G1 between the (1-1)^{th} side wall 231a and the (2-1)^{th} side wall 251a.

Referring to FIGS. 5 to 9, according to an embodiment, the ducts 271 and 272 may be disposed on the (1-1)^{th} side wall 231a of the first housing 230 (e.g., the first side wall 231). In an embodiment, the ducts 271 and 272 may include a first duct 271 and a second duct 272 spaced apart from each other on the surface of the (1-1)^{th} side wall 231a of the first housing 230 (e.g., the first side wall 231). In an embodiment, the ducts 271 and 272 may be grooves or recesses dented into the surface of the first side wall 231. In an embodiment, the ducts 271 and 272 may be connected to the gap G1 in the form of being open to the gap G1. For example, the ducts 271 and 272 may refer to surfaces dented into the first side wall 231 and the spaces surrounded by the surfaces. According to an embodiment, the ducts 271 and 272 may substantially face the surface of the second side wall 251 located thereabove (in the +Y direction). In an embodiment, the ducts 271 and 272 may also be disposed in the second housing 250 (e.g., the second side wall 251). For example, the ducts 271 and 272 may be formed in the first side wall 231 and/or the second side wall 251. For example, when the ducts 271 and 272 are formed in the second side wall 251, the ducts may be referred to as dent surfaces of the second side wall 251 and spaces surrounded by the surfaces.

Referring to FIG. 6, the ducts 271 and 272 may redirect the flow of water W toward the inner space of the electronic device 101 along the peripheral direction of the electronic device 101. Referring to FIGS. 7 to 9, the air resistance of the gap G1 may be greater in the section leading from the ducts 271 and 272 to the inner space of the electronic device 101 than at the positions of the ducts 271 and 272. For example, water W introduced from the outside of the electronic device 101 may flow through the gap G1 to reach the ducts 271 and 272 and, instead of continuing into the inner space of the electronic device 101 past the ducts 271 and 272, may be guided to flow along the ducts 271 and 272, which have relatively smaller air resistance. For example, all or only a portion of the introduced water W may flow into the ducts 271 and 272. For example, the water W, which moves toward the inner space rather than entering the ducts 271 and 272, may be blocked by ribs 276 and 277, which will be described later.

Referring to FIGS. 5 and 6, according to an embodiment, the first duct 271 extends along the surface of the (1-1)^{th} side wall 231a and may be bent or curved by the structure of the first side wall 231. For example, at least a portion of the first duct 271 may extend in the width direction (the X-axis direction) of the electronic device 101. For example, the first duct 271 may be partially interrupted by a first through-area 235 formed through the (1-1)^{th} side wall 231a. For example, the water W introduced into the first through-area 235 or the surrounding gap G1 of the first through-area 235 may flow in one direction (e.g., the +X direction) along the first duct 271, which is connected to one side of the first through-area 235. For example, the water W introduced into the first through-area 235 or the gap G1 adjacent to the first through-area 235 may flow in the opposite direction (e.g., the -X direction) along the first duct 271, which is connected to the other side of the first through-area 235 directed opposite to the one side.

According to an embodiment, the second duct 272 may be arranged on the surface of the (1-1)^{th} side wall 231a, and may be spaced apart from the first duct 271. Referring to FIG. 9, in an embodiment, the first side wall 231 may be formed such that some areas around the audio hole 291 are lower (in the -Y direction) than other areas (e.g., see FIG. 8). In an embodiment, the (1-1)^{th} side wall 231a around the audio hole 291 may have an off-set shape (e.g., a step shape), and the step closer to the rear surface cover 260 may be formed lower (in the -Y direction). For example, the gap G1 between the (1-1)^{th} side wall 231a around the audio hole 291 and the second side wall 251 (or the gap G1 around the audio hole 291) may be formed to be inclined toward the inner space as a whole. Accordingly, the gap G1 around the audio hole 291 may be more vulnerable to submersion than the gap G1 in other portions that are less inclined or substantially parallel to the thickness direction of the electronic device 101 (the Z-axis direction).

According to an embodiment, a first duct 271 and a second duct 272 for supplementing the water-blocking function of the first duct 271 may be provided on the surface of the first side wall 231 around the audio hole 291. For example, the step where the (1-1)^{th} side wall 231a where the second duct 272 is formed may be positioned lower than (closer, in the -Y direction, to) the step where the first duct 271 is formed. For example, the second duct 272 may be disposed closer to the interior of the electronic device 101 than the first duct 271 of the gap G1. For example, the second duct 272 may be disposed closer to the second plate portion 252 of the second housing 250 and the rear cover 260 than the first duct 271. For example, when considering the length of the path leading to the inner space of the electronic device 101 along the gap G1, the path may be shorter in the second duct 272 than in the first duct 271. For example, the second duct 272 may be closer to the inner space of the electronic device 101 than the first duct 271. However, the positions, shapes and/or number of the ducts 271 and 272 are not limited to the disclosure including the drawings. For example, depending on the structures of the housings 230 and 250 and the relationship with the internal configuration arranged in the inner space, the positions and/or shapes may be changed and may be additionally provided in the housings 230 and 250 (e.g., the first side wall 231, the first plate portion 232, the second side wall 251, and/or the second plate portion 252).

According to an embodiment, at least a portion of the water W introduced into the first duct 271 may move toward the interior of the electronic device 101 along the gap G1 around the audio hole 291 and may be partially or completely blocked by a second rib 277 (described below) located between the first duct 271 and the second duct 272. All or some of the water W not blocked by the second rib 277 may be blocked by the second duct 272.

Referring to FIG. 5, the second duct 272 extends along the surface of the (1-1)^{th} side wall 231a and may be bent or curved by the structure of the first side wall 231. For example, at least a portion of the second duct 272 may extend parallel (e.g., substantially parallel to) the width direction of the electronic device 101 (the X-axis direction) and/or the first duct 271. For example, the second duct 272 may be bent to avoid the audio hole 291. For example, at least a portion of the second duct 272 may have a width greater in the thickness direction of the electronic device 101 (the Z-axis direction) than that of the first duct 271.

In an embodiment, the ribs 276 and 277 may include at least one first rib 276 disposed on the first side wall 231 of the first housing 230 and at least one second rib 277 disposed on the second side wall 251 of the second housing 250.

In an embodiment, the ribs 276 and 277 may protrude from the first side wall 231 or the second side wall 251 and may close at least a portion of the gap G1. For example, when considering the length of the path leading to the internal space of the electronic device 101 along the gap G1, the path may be shorter in the ribs 276 and 277 than in the first duct 271, and shorter in the second duct 272 than in the ribs 276 and 277. For example, the ribs 276 and 277 may be disposed closer to the inner space of the electronic device 101 than the first duct 271 and farther from the inner space of the electronic device 101 than the second duct 272.

For example, the ribs 276 and 277 may be disposed between the inner space of the electronic device 101 and the first duct 271. For example, the ribs 276 and 277 may additionally block water W that has not yet flowed into the first duct 271, thereby preventing or mitigating the flooding of the inner space of the electronic device 101.

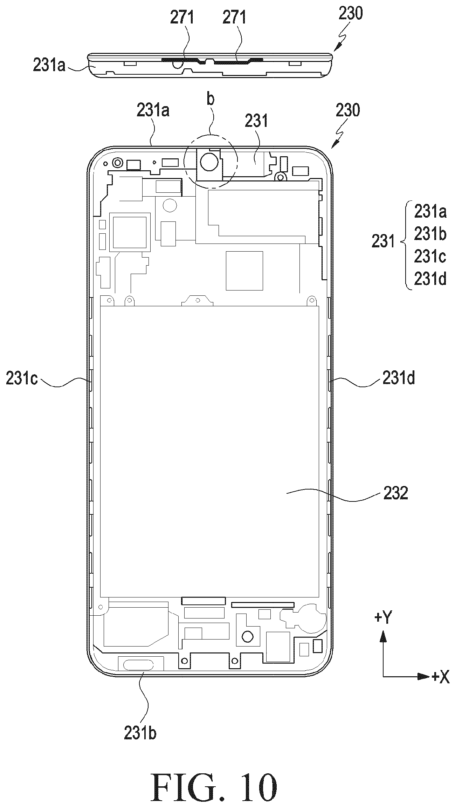

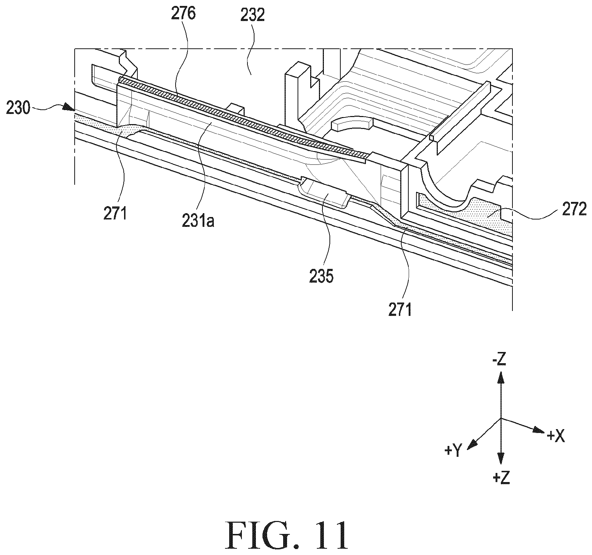

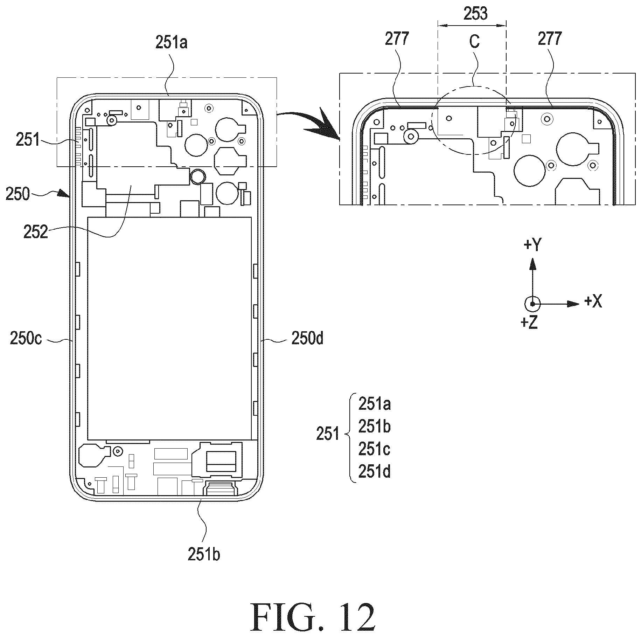

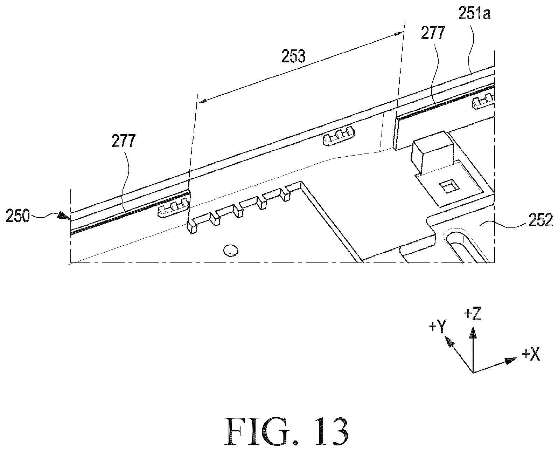

FIG. 10 is a view illustrating a first housing and a duct of an electronic device according to an embodiment disclosed herein. FIG. 11 is a detailed view of portion b of FIG. 10. FIG. 12 is a view illustrating a second housing and a portion of a rib of an electronic device according to an embodiment disclosed herein. FIG. 13 is a detailed view of portion c of FIG. 12.

The first housing 230 in FIGS. 10 and 11 may be referred to as the first housing 230 illustrated in FIGS. 5 to 9. The second housing 250 in FIGS. 12 and 13 may be referred to as the second housing 250 illustrated in FIGS. 5 to 9. The first duct 271 of FIGS. 10 and 11 may be referred to as the first duct 271 of FIGS. 5 to 9. The second duct 272 of FIGS. 10 and 11 may be referred to as the second duct 272 of FIGS. 5 and 9. The first rib 276 of FIG. 11 may be referred to as the first rib 276 of FIG. 5. The second rib 277 in FIG. 12 may be referred to as the second rib 277 in FIG. 5 and FIGS. 7 to 9.

Referring to FIG. 10, in an embodiment, a waterproof structure 270 may include a first duct 271 and a second duct 272 disposed in the central portion of the (1-1)^{th} wall 231a of the first wall 231. However, the shapes and arrangement of the first duct 271 and the second duct 272 are not limited to the above description. For example, the first duct 271 and/or the second duct 272 may extend further in the width direction of the electronic device 101 (e.g., the X-axis direction) from the central portion of the surface of the (1-1)^{th} side wall 231a. For example, the first duct 271 and/or the second duct 272 may be formed on the surface of the (1-1)^{th} side wall 231a, the (1-2)^{th} side wall 231b, the (1-3)^{th} side wall 231c, and/or the (1-4)^{th} side wall 231d. For example, the first duct 271 may extend from the central portion of the (1-1)^{th} side wall 231a to a portion of the (1-3)^{th} side wall 231c and/or the (1-4)^{th} side wall. However, the positions, shapes and/or number of the ducts 271 and 272 are not limited to the disclosure including the drawings. For example, depending on the structures of the housings 230 and 250 and the relationship with the internal configuration arranged in the inner space, the positions and/or shapes may be changed and may be additionally provided in the housings 230 and 250 (e.g., the first side wall 231, the first plate portion 232, the second side wall 251, and/or the second plate portion 252).

According to an embodiment, in the basic state of the electronic device 101 in which the upper end side walls (the (1-1)^{th} side wall 231a and the (2-1)^{th} side wall 251a) of the electronic device 101 face upward, at least a portion of the water W that has flown into the gap G1 may flow into the first duct 271 and/or the second duct 272. For example, the water W that has flown into the first duct 271 may flow in the peripheral direction of the electronic device 101. For example, the water W that has flown into the first duct 271 and/or the second duct 272 may be accumulated in the first duct 271 and then evaporated or released again through an arbitrary path through the gap G1. For example, the water W that has flown into the first duct 271 may flow along the first duct 271 and then flow down along the gap G1 between the (1-3)^{th} side wall 231c and the (2-3)^{th} side wall 251c connected to the first duct 271 and/or the gap G1 between the (1-4)^{th} side wall 231d and the (2-4)^{th} side wall 251d. For example, in the basic state of the electronic device 101, the water W flowing along the gap G1 between the left and right side walls 231c, 231d, 251c, and 251d is directed in the direction of gravity (the -Y direction), and therefore may not penetrate into the inner space of the electronic device 101 where internal components such as a printed circuit board (e.g., the printed circuit board 240 in FIG. 4) are arranged.

Referring to FIG. 11, in an embodiment, the first rib (e.g., the first rib 276 in FIGS. 5 and 8) may be formed to protrude on a portion of the (1-1)^{th} side wall 231a. For example, the first rib 276 may be formed on a portion (e.g., the surface in the +Z direction) of the first side wall 231 that faces the core area 253 of the second side wall 251 described below. According to an embodiment, the first rib 276 may be disposed closer to the second plate portion 252 and/or the rear cover than the first duct 271 and/or the second duct 272. For example, when considering the length of the path leading to the inner space of the electronic device 101 along the gap G1, the path may be shorter in the first rib 276 than in the first duct 271 and/or the second duct 272. For example, the first rib 276 may be closer to the inner space of the electronic device 101 than the first duct 271 and/or the second duct 272. For example, the first rib 276 may protrude toward the second housing 250 (e.g., the second plate portion 252). For example, the first rib 276 may block at least a portion of the gap G1 between the first side wall 231 and the second housing 250 (e.g., the second plate portion 252) that face each other. For example, the first rib 276 may have a protruding shape to be substantially contact in contact with or slightly separate from the second plate portion 252 that faces the first rib.

Referring to FIG. 13, in an embodiment, the second side wall 251 may include an undercut core area 253 in the center of the (2-1)^{th} side wall 251a. For example, the core area 253 may be detent in a surface (e.g., the surface in the -Y direction) of the (2-1)^{th} side wall 251a that faces the (1-1)^{th} side wall 231a. For example, the core area 253 may have a thinner average thickness (thickness in the Z-axis direction) than other areas of the second side wall 251. For example, components of the electronic device 101 may be arranged in the core area 253. For example, components of the electronic device 101, such as audio modules (e.g., the audio modules 203, 207, and 214 in FIGS. 2 and 3) and/or camera modules (e.g., the camera modules 205, 212, and 213 in FIGS. 2 and 3) may be at least partially arranged in the core area 253. For example, a communication receiver (e.g., the audio module 170 in FIG. 1) connected to an audio hole (e.g., the audio hole 291 in FIGS. 5 and 9) may be arranged in the core area 253. According to an embodiment, it may be difficult to form a rib (e.g., the second rib 277) in the core area 253 since components of the electronic device 101 are arranged. For example, the first rib 276 (e.g., the first rib 276 in FIGS. 5 and 8) may be formed in a partial area of the (1-1)^{th} side wall 231a facing the core area 253.

Referring to FIGS. 12 and 13, in an embodiment, the second rib 277 (e.g., the second rib 277 in FIGS. 5 and 7 to 9) may protrude in a portion of the (2-1)^{th} side wall 251a. According to an embodiment, the second rib 277 may be disposed on a surface (e.g., the surface in the -Y direction) of the (2-1)^{th} side wall 251a facing the (1-1)^{th} side wall 231a. In an embodiment, the second rib 277 may extend along the (2-1)^{th} side wall 251a, but may be interrupted at some areas depending on the structure of the (2-1)^{th} side wall 251a. For example, the second rib 277 may be disposed on opposite side portions of the core area 253 excluding the core area 253 of the (2-1)^{th} side wall 251a.

The positions, shapes and/or number of the ribs 276 and 277 of the above-described embodiments are not limited to the description of the disclosure including the drawings. For example, depending on the structures of the housing 230 and 250 and the relationship with the internal configuration arranged in the inner space, the positions and/or shapes may be changed and may be additionally provided in the housings 230 and 250 (e.g., on the first side wall 231, the first plate portion 232, the second side wall 251 and/or the second plate portion 252).

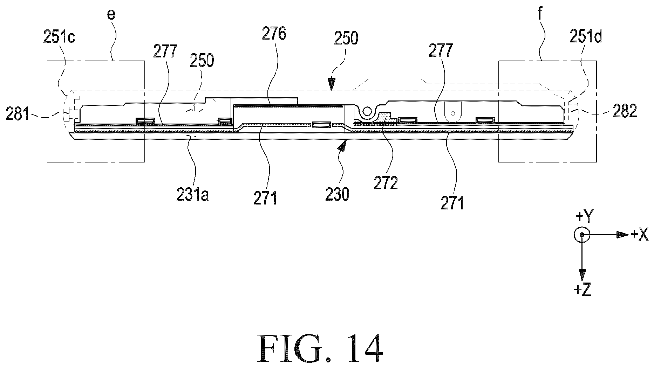

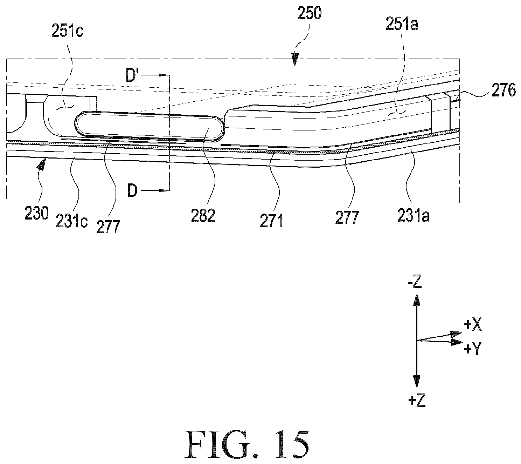

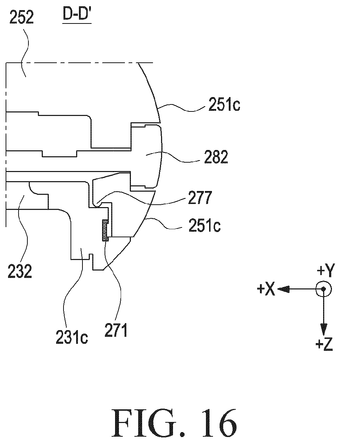

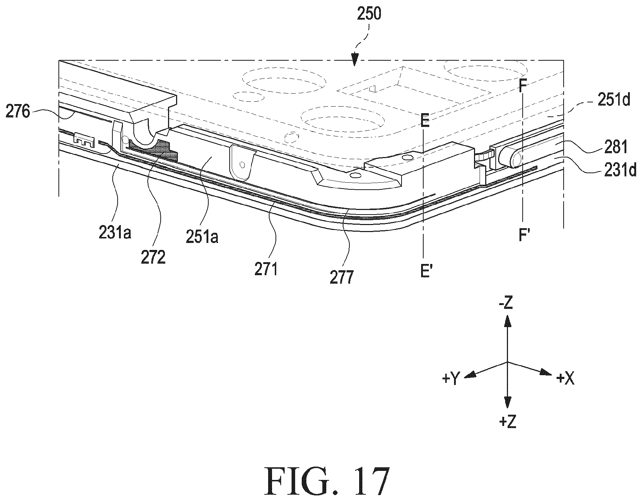

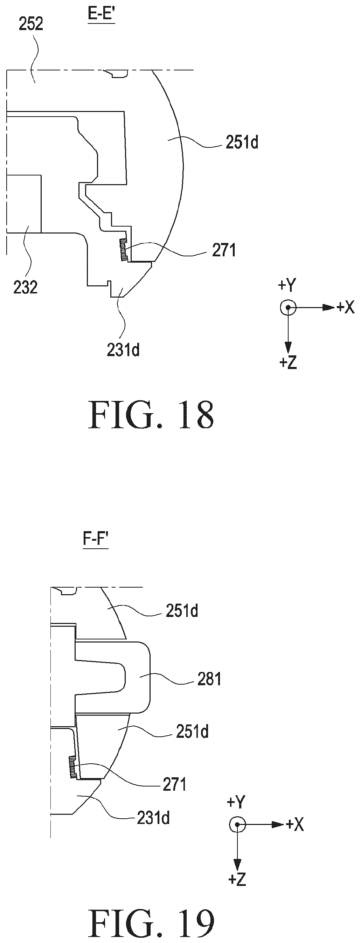

FIG. 14 is a view illustrating a first housing 230, a second housing 250, and a waterproof structure of an electronic device 101 according to an embodiment disclosed herein. FIG. 15 is an enlarged view of portion e of FIG. 14. FIG. 16 is a cross-sectional view taken along line D-D' of FIG. 15. FIG. 17 is an enlarged view of portion f of FIG. 14. FIG. 18 is a cross-sectional view taken along line E-E' of FIG. 17. FIG. 19 is a cross-sectional view taken along line F-F' of FIG. 18.

The configuration of the first housing 230 of FIGS. 14 to 19 may be wholly or partially identical to the configuration of the first housing 230 of FIGS. 5 to 9 and/or FIGS. 10 and 11. The configuration of the second housing 250 of FIGS. 14 to 19 may be wholly or partially identical to the configuration of the second housing 250 of FIGS. 5 to 9 and/or FIGS. 12 and 13. The configuration of the waterproof structure 270 of FIG. 14 may be wholly or partially identical to the configuration of the waterproof structure 270 of FIG. 5. The configuration of the first duct 271 of FIGS. 14 to 19 may be wholly or partially identical to the configuration of the first duct 271 of FIGS. 5 to 9 and/or FIGS. 10 and 11. The configuration of the second duct 272 of FIGS. 14 and 17 may be wholly or partially identical to the configuration of the second duct 272 of FIGS. 5 and 9 and/or the second duct 272 of FIGS. 12 and 13. The configuration of the first duct 276 of FIGS. 14, 15, and 17 may be wholly or partially identical to the configuration of the first rib 276 of FIGS. 5 and 8 and/or the first rib 276 of FIG. 11. The configuration of the second rib 277 of FIGS. 14 to 16 may be wholly or partially identical to the configuration of the second rib 277 of FIGS. 5 and 7 to 9 and/or FIGS. 12 and 13.

Referring to FIGS. 14 to 19, the first duct 271 of the waterproof structure 270 may be formed over the entirety of the electronic device 101 (e.g., the electronic device 101 in FIG. 4) on the (1-1)^{th} side wall 231a (e.g., the (1-1)^{th} side wall 231a in FIGS. 10 and 11) of the first side wall 231 (e.g., the first side wall 231 in FIGS. 10 and 11). For example, at least a portion of the first duct 271 may extend concavely in the width direction (e.g., the X-axis direction) on the (1-1)^{th} side wall 231a.

According to an embodiment, the gap G1 formed between the first housing 230 and the second housing 250 may be formed across all or part of the periphery of the electronic device 101 (or the periphery of the first housing 230 and/or the second housing 250). For example, the gap G1 (e.g., the gap G1 in FIGS. 6 to 9) formed between the (1-1)^{th} side wall 231a and the (2-1)^{th} side wall 251a (or the second plate portion 252) may extend between the (1-3)^{th} side wall 231c and the (2-3)^{th} side wall 251c (or the second plate portion 252) and/or between the (1-4)^{th} side wall 231d and the (2-4)^{th} side wall 251d (or the second plate portion 252).

Referring to FIGS. 14 to 19, in an embodiment, the second rib 277 may extend from the (2-1)^{th} side wall 251a (e.g., the (2-1)^{th} side wall 251a in FIG. 12) to at least a portion of the (2-3)^{th} side wall 251c (e.g., the (2-3)^{th} side wall 251c in FIG. 12) and/or the (2-4)^{th} side wall 251d (e.g., the (2-4)^{th} side wall 251d in FIG. 12). In an embodiment, the first duct 271 may extend concavely between opposite ends (the ends in the X-axis direction) of the (1-3)^{th} side wall 231c along the length of the (1-3)^{th} side wall 231c. According to an embodiment, the first duct 271 may extend from the (1-1)^{th} side wall 231a of the first side wall 231 to at least a portion of the (1-3)^{th} side wall 231c (e.g., the (1-3)^{th} side wall 231c in FIG. 10) and/or the (1-4)^{th} side wall 231d (e.g., the (1-4)^{th} side wall 231d in FIG. 10).

Referring to FIGS. 15 and 16, in an embodiment, the (1-3)^{th} side wall 231c of the first housing 230 and the (2-3)^{th} side wall 251c of the second housing 250, which overlap each other, may include a mounting area that is partially removed or penetrated to accommodate the storage medium tray 282. For example, the mounting area may be connected to the gap G1. Referring to FIG. 15, the (1-3)^{th} side wall 231c and the (2-3)^{th} side wall 251c may not overlap each other around the mounting area where the storage medium tray 282 is placed. For example, the peripheral portion may have a short path formed along the gap G1 to the inner space of the electronic device 101, and may be relatively vulnerable to flooding. For example, at least one duct (e.g., the first duct 271) and a rib (e.g., the second rib 277) that complements the water-blocking function of the duct may both be arranged around the mounting area. However, the positions, shapes, and/or number of first ducts 271, first ribs 276, and/or second ribs 277 are not limited to those described above. For example, the (1-3)^{th} side wall 231c may further include a first rib 276 (not illustrated) in the portion forming the mounting area.

Referring to FIGS. 17 to 19, in an embodiment, the (1-4)^{th} side wall 231d of the first housing 230 and the (2-4)^{th} side wall 251d of the second housing 250, which overlap each other, may include an accommodation area that is partially deleted or penetrated to accommodate the key assembly 281. For example, the above accommodation area may be connected to the gap G1. Referring to FIGS. 18 and 19, the (1-4)^{th} side wall 231d and the (2-4)^{th} side wall 251d may not overlap around the accommodation area where the key assembly 281 is placed. For example, the peripheral portion of the accommodation area (e.g., FIG. 19) may form a shorter path along the gap G1 to the inner space of the electronic device 101 compared to other portions (e.g., FIG. 18). For example, the side walls may further include at least one rib (not illustrated) extending parallel to the first duct 271 around the accommodation area. For example, the (2-3)^{th} side wall 251c may further include a second rib 277 (not illustrated) in the portion forming the accommodation area. For example, the (1-3)^{th} side wall 231c may further include a first rib 276 (not illustrated) in the portion forming the accommodation area.

An electronic device including the above-described waterproof structures (e.g., ducts and ribs) and/or housings according to the embodiments disclosed herein are not limited to the aforementioned embodiments and drawings, and it will be apparent to those ordinarily skilled in the art that various substitutions, modifications, and changes can be made within the technical scope disclosed herein.

The positions, shapes and/or number of ducts 271 and 272 described above with reference to FIGS. 5 to 19 are not limited to the disclosure including the drawings. For example, depending on the structures of the housings 230 and 250 and the relationship with the internal configuration arranged in the inner space, the positions and/or shapes may be changed and may be additionally provided in the housings 230 and 250 (e.g., the first side wall 231, the first plate portion 232, the second side wall 251, and/or the second plate portion 252). For example, the ducts 271 and 272 may be designed to avoid certain structures of the first and second side walls 231 and 251 or internal configurations. For example, the ducts 271 and 272 may have their positions and/or shapes (e.g., width, depth, length) changed or further provided to enhance the water-blocking function for some structures or internal configurations of the first and second side walls 231 and 251.

The positions, shapes and/or number of ribs 276 and 277 described above with reference to FIGS. 5 to 19 are not limited to the disclosure including the drawings. For example, depending on the structures of the housings 230 and 250 and the relationship with the internal configuration arranged in the inner space, the positions and/or shapes may be changed and may be additionally provided in the housings 230 and 250 (e.g., the first side wall 231, the first plate portion 232, the second side wall 251, and/or the second plate portion 252). For example, the ribs 276 and 277 may be designed to avoid certain structures of the first and second side walls 231 and 251 or internal configurations. For example, the ribs 276 and 277 may have their positions and/or shapes (e.g., width, depth, length) changed or further provided to enhance the water-blocking function for some structures or internal configurations of the first and second side walls 231 and 251.

A housing of an electronic device may generally include multiple components assembled together, such as front and rear surface housings. Typically, a lifting phenomenon or assembly gap may occur between the assembled front and rear surface housings. For example, assembly gaps may be connected from the outer surface of the electronic device to the inner space enclosed by the housings. As a result, external fluids (e.g., water) may penetrate into the inner space of the electronic device through the assembly gap. Since electronic components, such as printed circuit boards, that are vulnerable to flooding are disposed in the inner space of the electronic device, it may be necessary to implement a waterproof structure that blocks the gaps in the housings. In general, a method of arranging a strip-shaped blocking member (e.g., sponge) inside the rear housing facing the front housing along the peripheral direction may be applied. However, the method of attaching a separate blocking member to a housing may increase the number of members and requires additional processes such as attachment and compression of the shielding member, which may increase the overall cost.

The embodiments disclosed herein may implement a flooding prevention function of an internal structure of an electronic device without a separate process of attaching a waterproof member, such as sponge, to a gap formed along the coupled area between two housings by integrally forming waterproof structures in the respective coupled areas of two housings. In an embodiment, a waterproof structure may be integrally formed in each of the coupled areas of the two housings, and a waterproof member such as sponge may be attached to the gap formed along the coupled areas between the two housings.

The problems to be solved by the embodiments disclosed herein are not limited to the aforementioned descriptions, and may be variously expanded without departing from the spirit and scope disclosed herein.

An electronic device 101 according to an embodiment disclosed herein may include a display (201 in FIG. 2 and/or 220 in FIGS. 4, 7, and 8), a rear surface cover (260 in FIGS. 4, 7, and 8) facing the front surface cover, and/or a housing surrounding an inner space defined between the display and the rear surface cover. The housing may include a first housing (230 in FIGS. 4, 10, and 14) including a first plate portion (232 in FIGS. 4, 7, 8, 10, and 11) at least partially facing the display and a first side wall (231 in FIGS. 4 and 10) surrounding a perimeter of the first plate portion. The housing may include a second housing (250 in FIGS. 4, 12, and 14) including a second plate portion (252 in FIGS. 4, 7, 8, 12, and 13) to which the rear surface cover is coupled, and a second side wall (251 in FIGS. 4 and 12) surrounding a perimeter of the second plate portion and spaced outwardly apart from at least a portion of the first side wall. Between the first housing and the second housing, a gap may extend from a separation space between the first side wall and the second side wall. The first side wall may include a duct (271 in FIGS. 14 to 19, or 272 in FIGS. 5, 9, and 11) that extends concavely along the peripheral direction of the electronic device in a form in which an upper portion is open to the gap.

In an embodiment, the duct may be formed concavely in a portion of a surface of the first side wall facing the second side wall.

In an embodiment, an air resistance in the gap may be greater in an area closer to the inner space than in an area where the duct is positioned.

In an embodiment, the duct may be bent to avoid at least one through-area formed in a portion of the first side wall.

In an embodiment, the duct may include multiple ducts including a first duct (271 in FIGS. 14 to 19) and a second duct (272 in FIGS. 5, 9, and 11) positioned closer to the inner space than the first duct.

In an embodiment, the second duct may be configured such that a path length of the second duct between the separation space and the inner space is relatively shorter than a path length of the second duct in other areas of the first side wall.

In an embodiment, the second duct may extend at least partially parallel to the first duct.

In an embodiment, at least one of the first side wall or the second side wall may include at least one rib 276 or 277 protruding into the gap and extending along a peripheral direction of the electronic device.

In an embodiment, the rib may be positioned closer to the inner space than the duct.

In an embodiment, the duct and the rib may extend parallel to each other in at least a partial area of a periphery of the electronic device.

In an embodiment, the duct may include multiple ducts, which include a first duct and a second duct positioned closer to the inner space than the first duct. The second duct may be disposed between the first duct and the rib.

In an embodiment, the duct may include at least one duct formed on one surface of the first side wall, and the rib may include at least one rib formed on a surface of the second side wall facing the one surface of the first side wall.

In an embodiment, the first side wall may include a first rib spaced apart from the duct, and the second side wall may include multiple second ribs.

In an embodiment, the first rib and the second ribs may each extend parallel to at least a portion of the duct and do not overlap each other in at least a partial area.

In an embodiment, the electronic device may further include a printed circuit board 240 disposed in the inner space.

An electronic device 101 according to an embodiment disclosed herein may include a display (201 in FIG. 2 and/or 220 in FIGS. 4, 7, and 8), a rear surface cover (260 in FIGS. 4, 7, and 8) facing the front surface cover, and/or a housing surrounding an inner space defined between the display and the rear surface cover. The housing may include a first housing (230 in FIGS. 4, 10, and 14) including a first side wall (231 in FIGS. 4 and 10) at least partially facing the display and forming a portion of the side wall. The housing may include a second housing (250 in FIGS. 4, 12, and 14) including a second side wall (251 in FIGS. 4 and 12) at least partially facing the rear surface cover and forming a remaining portion of the side wall and spaced outwardly apart from the first side wall. Between the first housing and the second housing, a gap may extend from a separation space between the first side wall and the second side wall. The first side wall may include a duct (271 in FIGS. 14 to 19, or 272 in FIGS. 5, 9, and 11) that extends concavely along the peripheral direction of the electronic device in a form in which an upper portion is open to the gap.

In an embodiment, the duct may be formed concavely in a portion of a surface of the first side wall that faces the second side wall.

In an embodiment, at least one of the first side wall or the second side wall may include at least one rib 276 or 277 protruding into the gap and extending along a peripheral direction of the electronic device.

In an embodiment, the duct and the rib may extend parallel to each other in at least a partial area of a periphery of the electronic device.

In an embodiment, the duct may include multiple ducts, which include a first duct and a second duct positioned closer to the inner space than the first duct. The second duct may be disposed between the first duct and the rib.

According to an embodiment disclosed herein, in addition to the process of assembling the housing, no additional process of attaching or pressing the waterproof member to the housing is required. Therefore, compared to the general method of separately attaching the waterproof member to the housing, the number of components in the electronic device may be reduced, the assembly process may be simplified, and the overall cost may be reduced accordingly.

The effects derived from the embodiments disclosed herein are not limited to the above-described effects, and may be variously expanded within a scope that does not deviate from the spirit and scope disclosed herein.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display (201; 220);
a rear surface cover (260) facing the display; and
a housing (210; 230 and 250) surrounding an inner space formed between the display and the rear cover,
wherein the housing comprises:
a first housing (230) comprising a first plate portion (232) at least partially facing the display, and a first side wall (231) surrounding a perimeter of the first plate portion; and
a second housing (250) comprising a second plate portion (252) to which the rear surface cover is coupled, and a second side wall (251) surrounding a perimeter of the second plate portion and spaced outwardly apart from at least a portion of the first side wall,
wherein, between the first housing and the second housing, a gap (G1) extends from a separation space between the first side wall and the second side wall, and
wherein the first side wall comprises at least one duct (271, 272) that is connected to the gap and concavely extends along a peripheral direction of the electronic device.

2. The electronic device of claim 1, wherein the duct is formed concavely in a portion of a surface of the first side wall facing the second side wall.

3. The electronic device according to claim 1 or 2, wherein an air resistance in the gap is greater in an area closer to the inner space than in an area where the duct is positioned.

4. The electronic device of one of claims 1 to 3, wherein the duct is bent to avoid at least one through-area formed in a portion of the first side wall.

5. The electronic device of one of claims 1 to 4, wherein the duct comprises multiple ducts including a first duct (271) and a second duct (272) positioned closer to the inner space than the first duct.

6. The electronic device of claim 5, wherein the second duct is configured such that a path length of the second duct between the separation space and the inner space is relatively shorter than a path length of the second duct in other areas of the first side wall.

7. The electronic device according to claim 5 or 6, wherein the second duct extends at least partially parallel to the first duct.

8. The electronic device of one of claims 1 to 7, wherein at least one of the first side wall or the second side wall comprises at least one rib (276, 277) protruding into the gap and extending along a peripheral direction of the electronic device.

9. The electronic device of claim 8, wherein the rib is positioned closer to the inner space than the duct.

10. The electronic device according to claim 8 or 9, wherein the duct and the rib extend parallel to each other in at least a partial area of a periphery of the electronic device.

11. The electronic device of one of claims 8 to 10, wherein the first side wall comprises multiple ducts including a first duct and a second duct positioned closer to the inner space than the first duct, and
wherein the second duct is disposed between the first duct and the rib.

12. The electronic device of one of claims 8 to 11, wherein the at least one duct is formed on one surface of the first side wall, and the at least one rib is formed on a surface of the second side wall facing the one surface of the first side wall.

13. The electronic device of one of claims 8 to 12, wherein the first side wall comprises a first rib spaced apart from the duct, and the second side wall comprises multiple second ribs.

14. The electronic device of claim 13, wherein the first rib and the second ribs each extend parallel to at least a portion of the duct and do not overlap each other in at least a partial area.

15. The electronic device of one of claims 1 to 14, further comprising a printed circuit board (240) disposed in the inner space.
